# EUROPÄISCHE PATENTANMELDUNG

(11) **EP 1 243 371 A1**
(43) Veröffentlichungstag der Anmeldung: **25.09.2002**
(21) Anmeldenummer: 01106807.9
(22) Anmeldetag: 19.03.2001
(51) Int. Cl.: B23F 19/10

(54) **Vorrichtung und Verfahren zum Anspitzen von Stirnseiten von Zahnradzähnen**

(71) Anmelder: Ford Global Technologies, Inc., A subsidiary of Ford Motor Company, Dearborn, Michigan 48126 (US)
(72) Erfinder: Mohr, Christian, 54290 Trier (DE); Rüdiger, Michael, 50769 Köln (DE)
(74) Vertreter: Drömer, Hans-Carsten, Dipl.-Ing.

(57) **Zusammenfassung**

Die Erfindung betrifft eine Vorrichtung und ein Verfahren, mit der bzw. mit dem zwei Zähne (14, 15) eines Zahnrades (11) gleichzeitig an ihrer Stirnseite angespitzt werden können. Bei einer ersten Ausgestaltung der Vorrichtung rotiert eine Schneide (13) entlang der Fläche eines Kegelstumpfes od. dgl. am Ende einer Spindel (10), wobei die Dimensionierung des Kegelstumpfes so gewählt ist, dass zwei benachbarte Zähne (14, 15) zugleich bearbeitet werden können. Bei einer alternativen Ausgestaltung der Vorrichtung sind zwei Schneiden mit unterschiedlichem Abstand zur gemeinsamen Rotationsachse angeordnet, wobei zwei oder mehr Zähne eines Zahnrades jeweils in den Arbeitsbereich einer der Schneiden gebracht werden können.

## Beschreibung

Die Erfindung betrifft eine Vorrichtung zum Anspitzen der Stirnseiten von Zähnen eines Zahnrades, enthaltend eine Spindel mit mindestens einer Schneide, welche geneigt zur Drehachse der Spindel und auf diese zuweisend angeordnet ist. Ferner betrifft sie ein Verfahren zum Anspitzen der Stirnseiten von Zähnen eines Zahnrades, wobei eine rotierende Schneide an die anzuspitzende Stirnseite eines Zahnes herangeführt wird, um dort Material abzutragen.

Eine Vorrichtung und ein Verfahren der eingangs genannten Art sind aus der WO 98/31495 bekannt. Bei dieser Vorrichtung sind zwei Spindeln vorgesehen, welche Schlagmesser rotierend antreiben, so dass deren Schneiden bei Heranführung an die Stirnseite eines Zahnrades dort Material abtragen und somit die Stirnseite anspitzen. Derartige Anspitzungen an Zahnrädern sind zum Beispiel erwünscht, um das Ineinanderschieben von Zahnrädern in einem Getriebe zu erleichtern. Bei dem aus der WO 98/31495 bekannten Verfahren zur Herstellung der Anspitzungen an einem Zahnrad werden in einem Arbeitstakt durch einen entsprechenden Vorschub von zwei Spindeln zwei Stirnseiten an zwei verschiedenen Zähnen gleichzeitig bearbeitet. Durch schrittweises Weiterdrehen des Zahnrades können dann nach und nach alle Zähne des Zahnrades bearbeitet werden. Nachteilig bei der bekannten Vorrichtung ist jedoch, dass zwei separate Spindeln mit zugehörigen Antrieben, Lagerungen und dergleichen vorgesehen und angesteuert werden müssen, was einen entsprechend hohen Aufwand erfordert.

Vor diesem Hintergrund war es Aufgabe der vorliegenden Erfindung, eine Vorrichtung und ein Verfahren zum Anspitzen der Stirnseiten von Zähnen eines Zahnrades bereitzustellen, mit welchen eine besonders effiziente und kostengünstige Bearbeitung möglich ist.

Diese Aufgabe wird durch eine Vorrichtung nach Anspruch 1, eine Vorrichtung nach Anspruch 3, ein Verfahren nach Anspruch 5 und ein Verfahren nach Anspruch 8 gelöst. Vorteilhafte Ausgestaltungen sind in den jeweiligen Unteransprüchen enthalten.

Gemäß einer ersten Ausgestaltung der Erfindung enthält eine Vorrichtung zum Anspitzen der Stirnseiten von Zähnen eines Zahnrades eine Spindel mit mindestens einer Schneide, welche geneigt zur Drehachse der Spindel und auf diese zuweisend angeordnet ist. Die Spindel dient in bekannter Weise dazu, die Schneide in eine Rotationsbewegung um die Drehachse der Spindel zu versetzen. Bei dieser Rotationsbewegung beschreibt die Schneide vorzugsweise die innere Mantelseite eines Kegelstumpfes mit gerader Mantelfäche, wobei neben einer geraden Mantelfäche auch konkave, konvexe oder geeignete andere Flächen beschrieben werden können. Zum Zwecke der einfacheren Beschreibung wird jedoch nachfolgend beispielhaft von einer geraden Schneide ausgegangen, die einen Kegelstumpf mit gerader Mantelfäche beschreibt. Der Kegelwinkel dieses Kegelstumpfes wird durch den Neigungswinkel der Schneide relativ zur Drehachse der Spindel bestimmt, wobei im Extremfall die Schneidfläche des Werkzeugs senkrecht zur Spindelachse angeordnet sein kann . Der Durchmesser des Kegelstumpfes (an der Stelle größter, kleinster oder mittlerer Breite) wird durch den Abstand der Schneide von der Drehachse der Spindel bestimmt. Die Vorrichtung ist dadurch gekennzeichnet, dass der mittlere Abstand der Schneide von der Drehachse der Spindel so groß ist, dass bei Rotation der Spindel wenigstens zwei verschiedene Zähne des zu bearbeitenden Zahnrades gleichzeitig bearbeitet werden können.

Die erfindungsgemäße Vorrichtung hat somit den Vorteil, dass bereits mit einer einzigen Spindel in einem Arbeitstakt zwei (oder ggf. auch mehr) Stirnseiten von verschiedenen Zähnen eines Zahnrades gleichzeitig bearbeitet werden können. Gegenüber herkömmlichen Verfahren, bei denen mit einer Spindel in jedem Arbeitstakt nur eine Stirnseite bearbeitet werden kann, ergibt sich eine Zeitersparnis für die vollständige Bearbeitung eines Zahnrades von typischerweise 40 %. Aufgrund der nur einen vorzusehenden Spindel ist die Vorrichtung ferner konstruktiv erheblich einfacher als die aus der WO 98/31495 bekannte Vorrichtung, wobei auch eine Vereinfachung der Anwendung eintritt, da nicht zwei verschiedene Spindeln gleichzeitig präzise zu positionieren und anzusteuern sind.

Der mittlere Abstand der Schneide von der Drehachse der Spindel wird vorzugsweise so gewählt, dass er 20% bis 200%, besonders bevorzugt 80% bis 150% des Abstandes zweier benachbarter Zähne des zu bearbeitenden Zahnrades beträgt. Bei einer derartigen Dimensionierung wird erreicht, dass die Schneide bei ihrer Rotationsbewegung einen Kegelstumpfmantel od. dgl. beschreibt, welcher so an das Zahnrad herangeführt werden kann, dass durch ihn die Stirnseiten von zwei benachbarten Zähnen gleichzeitig erfasst beziehungsweise bearbeitet werden. Insbesondere werden dabei die einander abgewandten bzw. nach außen weisenden Seiten spanend bearbeitet (d.h. in Richtung der Zahnradachse gesehen die linke Seite des linken bearbeiteten Zahnes und die rechte Seite des rechten bearbeiteten Zahnes). Alternativ können auch drei oder mehr Zähne gleichzeitig bearbeitet werden.

Bei einer alternativen Ausgestaltung einer Vorrichtung zum Anspitzen der Stirnseiten von Zähnen eines Zahnrades mit mindestens einer Schneide, welche geneigt zur Drehachse einer Spindel und auf diese zuweisend angeordnet ist, enthält die Vorrichtung eine zweite Schneide. Auch diese Schneide ist geneigt zur Drehachse der Spindel und auf diese zuweisend angeordnet, jedoch ist der mittlere Abstand der zweiten Schneide von der Drehachse verschieden vom mittleren Abstand der ersten Schneide von der Drehachse und so groß gewählt, dass bei Rotation der Spindel zwei verschiedene Zähne des Zahnrades von den zwei verschiedenen Schneiden gleichzeitig bearbeitet werden können.

Auch mit der zweiten Ausgestaltung der Vorrichtung erzielt man somit den Vorteil, dass durch einen konstruktiv einfachen und zuverlässigen Aufbau mit nur einer Spindel die gleichzeitige Bearbeitung von zwei Zähnen in einem Arbeitstakt durchgeführt werden kann, was zu einer entsprechenden Zeitersparnis führt. Die zwei Schneiden beschreiben bei ihrer Rotationsbewegung jeweils die inneren Mantelseiten von Kegelstümpfen od. dgl., wobei der Kegelwinkel der Kegelstümpfe durch die jeweilige Neigung der Schneiden und der Durchmesser der Kegelstümpfe durch den Abstand der Schneiden von der Rotationsachse bestimmt wird. Aufgrund des verschieden gewählten Abstandes der Schneiden von der Rotationsachse entsteht dabei ein größerer Kegelstumpf und ein kleinerer Kegelstumpf. Diese können so an ein Zahnrad herangeführt werden, dass einer der Kegelstümpfe mit einer Stirnseite eines ersten Zahnes und der zweite Kegelstumpf mit einer Stirnseite eines zweiten Zahnes in Kontakt kommt, um die jeweilige Stirnseite zu bearbeiten.

Der mittlere Abstand der beiden Schneiden von der Drehachse der Spindel ist vorzugsweise so gewählt, dass die Differenz dieser Abstände 50% bis 200% des Abstandes der Zähne eines zu bearbeitenden Zahnrades beträgt. Bei einer derartigen Abstandsdifferenz sind die durch die Rotation der Schneiden beschriebenen Kegelstümpfe vorteilhafterweise gerade so dimensioniert, dass sie zwei benachbarte Zähne des zugehörigen Zahnrades bearbeiten können. Insbesondere werden dabei in dieselbe Richtung weisende Seiten der Zähne gleichzeitig bearbeitet (d.h. in Richtung der Zahnradachse gesehen die linke Seite des linken Zahnes und linke Seite des rechten Zahnes oder die rechte Seite des linken Zahnes und rechte Seite des rechten Zahnes).

Die Erfindung betrifft weiterhin ein Verfahren zum Anspitzen der Stirnseiten von Zähnen eines Zahnrades, wobei mindestens eine rotierende Schneide an eine anzuspitzende Stirnseite eines Zahnes herangeführt wird, um dort Material abzutragen. Gemäß einer ersten Ausgestaltung ist das Verfahren dadurch gekennzeichnet, dass die Stirnseiten von zwei verschiedenen Zähnen gleichzeitig in den Bewegungsbereich der Schneide gebracht werden und daher gleichzeitig von der Schneide bearbeitet werden können. Der Bewegungsbereich der Schneide ist dabei vorzugsweise kegelstumpfförmig.

Bei dem Verfahren kann somit durch die Rotation einer einzigen Schneide eine gleichzeitige Bearbeitung von zwei verschiedenen Zähnen erfolgen, was einen entsprechenden Zeitgewinn bei der vollständigen Bearbeitung eines Zahnrades ergibt. Gleichzeitig ist dieses Verfahren in seiner Durchführung einfacher als eine parallele Bearbeitung zweier Zähne mit zwei unabhängig voneinander rotierenden Schneiden.

Mit dem Verfahren werden vorzugsweise die voneinander abgewandten bzw. nach außen weisenden Seiten von zwei benachbarten Zähnen eines Zahnrades gleichzeitig bearbeitet. Ein solches Vorgehen hat den Vorteil, dass die bei Rotation einer geneigten Schneide beschriebene Kegelstumpf-Mantelfläche unter optimaler Ausnutzung der geometrischen Verhältnisse an ein zu bearbeitendes Zahnrad herangeführt werden kann.

Gemäß einer zweiten Ausgestaltung eines Verfahrens zum Anspitzen der Stirnseiten von Zähnen eines Zahnrades unter Heranführung mindestens einer rotierenden Schneide an eine anzuspitzende Stirnseite wird eine zweite rotierende Schneide eingesetzt. Die zweite rotierende Schneide ist dabei in ihrer Bewegung mit der ersten Schneide gekoppelt, also zum Beispiel fest verbunden, so dass beide Schneiden sich synchron drehen. Ferner ist die zweite Schneide relativ zur ersten so angeordnet, dass ihr Bewegungsbereich an die Stirnseite eines zweiten Zahnes herangeführt wird und dort Material abträgt, wenn die Stirnseite eines ersten Zahnes durch die erste Schneide bearbeitet wird. Vorzugsweise sind die Bewegungsbereiche der Schneiden jeweils kegelstumpfförmig.

Mit dem erläuterten Verfahren ist somit die gleichzeitige beziehungsweise synchrone Bearbeitung zweier verschiedener Zähne eines Zahnrades möglich. Dies bringt gegenüber der sequentiellen Bearbeitung einzelner Zähne des Zahnrades eine entsprechende Zeitersparnis mit sich. Durch die Kopplung der Bewegungen der beiden verwendeten Schneiden kann dabei jedoch die Durchführung des Verfahrens insgesamt einfacher und robuster ausgestaltet werden, als dies bei Verfahren der Fall ist, die zwei unabhängig voneinander rotierende Schneiden zur gleichzeitigen Bearbeitung zweier Zähne einsetzen.

Zur weiteren Reduktion der Bearbeitungszeit kann bei der zweiten Ausgestaltung des Verfahrens in vorteilhafter Weise vorgesehen sein, dass das Zahnrad von zwei Spindeln mit jeweils zwei gekoppelten Schneiden gleichzeitig derart bearbeitet wird, dass die erste Spindel die in eine Richtung weisenden Seiten von zwei Zähnen bearbeitet, während die zweite Spindel gleichzeitig die in die andere Richtung weisenden Seiten von zwei anderen Zähnen bearbeitet. Dabei sind die beiden Spindeln bevorzugt an unterschiedlichen Stellen entlang des Zahnradumfangs angeordnet, damit diese bei der Bearbeitung nicht kollidieren. Durch diese vorteilhafte Ausführungsform des Verfahrens können beide Zahnseiten jeweils paarweise simultan bearbeitet werden.

Vorzugsweise werden die zwei verschiedenen Schneiden bei dem Verfahren auf einen derartigen Abstand voneinander eingestellt, dass die in dieselbe Richtung zeigenden Seiten von zwei - vorzugsweise benachbarten - Zähnen eines Zahnrades gleichzeitig bearbeitet werden können. Ein solches Vorgehen nutzt in besonders günstiger Weise die geometrischen Verhältnisse des Zahnrades und der Bewegungsflächen der Schneiden aus.

Vorteilhafterweise werden die oben beschriebenen Verfahren mit erfindungsgemäßen Vorrichtungen der zuvor erläuterten Art durchgeführt.

Im Folgenden wird die Erfindung mit Hilfe der Figuren beispielhaft erläutert. Es zeigt:
- Fig. 1a: die Seitenansicht einer ersten Vorrichtung zum Anspitzen von Zähnen eines Zahnrades in ihrer Arbeitsstellung;
- Fig. 1b: die Vorrichtung und Ansicht von Figur 1a in transparenter Darstellung;
- Fig. 1c: die Schneide der Vorrichtung nach den Figuren 1a und 1b;
- Fig. 2: eine perspektivische Ansicht der Vorrichtung in Blickrichtung des Pfeiles II von Figur 1b;
- Fig. 3: eine perspektivische Ansicht der Vorrichtung in Blickrichtung des Pfeiles III von Figur 1b;
- Fig. 4: ein Zahnrad mit zwei von einer Vorrichtung nach den Figuren 1 bis 3 angespitzten benachbarten Zähnen;
- Fig. 5: eine vergrößerte Ansicht der angespitzten Zähne des Zahnrades von Figur 4;
- Fig. 6: eine transparente perspektivische Darstellung einer zweiten Vorrichtung zum Anspitzen von Zähnen eines Zahnrades in Arbeitsstellung;
- Fig. 7: eine Querschnittsansicht zu Figur 6;
- Fig. 8: eine vergrößerte Ansicht des Arbeitsbereiches der Vorrichtung nach Figur 6;
- Fig. 9: eine vergrößerte Ansicht von mit der Vorrichtung nach den Figuren 6 bis 8 angespitzten benachbarten Zähnen eines Zahnrades.

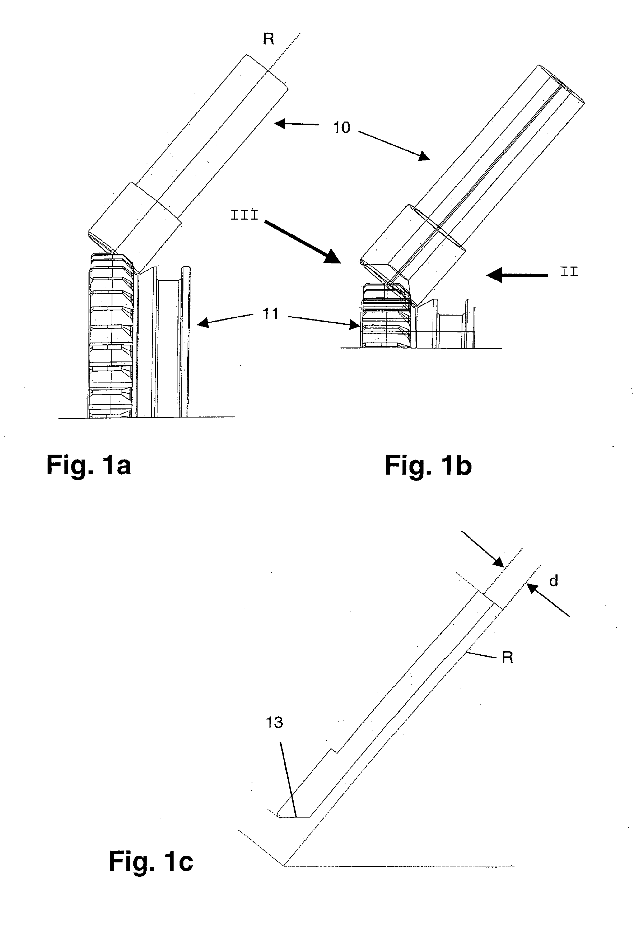

In den Figuren 1a, 1b und 1c ist in einer Seitenansicht eine erfindungsgemäße Vorrichtung zum Anspitzen der Stirnseiten von Zähnen eines Zahnrades gemäß einer ersten Ausgestaltung der Erfindung dargestellt. Die Anspitzungen der Zähne des Zahnrades 11 können insbesondere blockierfreie Anspitzungen für Verzahnungen von Schieberad-Rückwärtsgangsystemen sein. Beim Stand der Technik werden derartige Anspitzungen überwiegend mit sogenannten Schlagfräsen hergestellt, bei denen mit jedem Spindelhub (vor und zurück) eine einzige Anspitzung an einem Zahn hergestellt wird. Mit den in den Figuren dargestellten Vorrichtungen ist es dagegen möglich, immer jeweils zwei Anspitzungen an zwei nebeneinander liegenden Zähnen mit einem Hub herzustellen. Die Bearbeitungszeit kann hierdurch um ca. 40 % verringert werden.

In Figur 1a ist die Spindel 10 schematisch dargestellt, welche in Richtung ihrer Achse R vor- und zurückgeschoben werden kann, und welche mindestens ein Schneidmesser, das an ihrem Ende befestigt ist, um die Achse R in Rotation versetzen kann. Die Schneide 13 des Schneidmessers ist geneigt zur Rotationsachse R angeordnet. Vorzugsweise können auch zwei gegenüberliegende Schneiden oder noch weitere Schneiden vorgesehen sein.

Wie aus der transparenten Darstellung von Figur 1b und der separaten Darstellung des Schneidmessers in Figur 1c erkennbar wird, bewegt sich die Schneide 13 des Schneidmessers aufgrund ihrer Neigung relativ zur Rotationsachse R bei ihrer Rotation auf dem Mantel eines Kegelstumpfes. Der Kegelstumpf ist dabei von innen her zugänglich, das heißt, dass von dieser Seite her ein zu bearbeitendes Werkstück wie insbesondere ein Zahnrad 11 herangeführt werden kann.

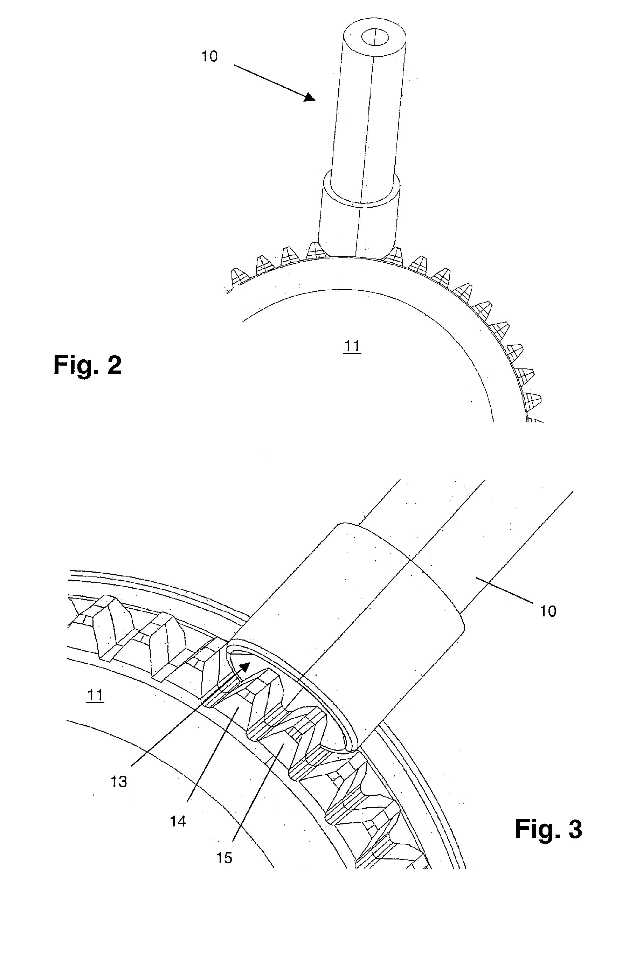

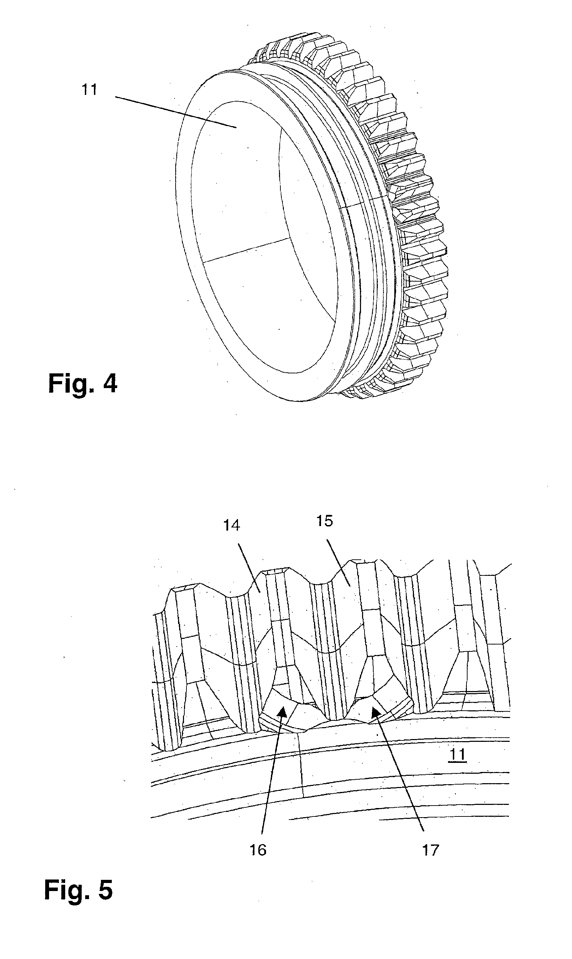

Insbesondere aus der perspektivischen Darstellung von Figur 3, die die Blickrichtung des Pfeiles III von Figur 1b darstellt, ist erkennbar, dass der mittlere Abstand d der Schneide 13 von der Rotationsachse R der Spindel 10 gerade so groß gewählt ist, dass zwei benachbarte Zähne 14 und 15 des Zahnrades 11 gleichzeitig in den kegelstumpfförmigen Arbeitsbereich der Schneide 13 eingeführt werden können. Dabei kommen die jeweiligen äußeren Seiten der Stirnseiten dieser Zähne 14 und 15 in den Arbeitsbereich der Schneide 13, so dass an diesen Flächen ein entsprechender Materialabtrag erzeugt wird. Die hierdurch entstehenden Anspitzungsflächen 16 und 17 sind in der Gesamtdarstellung eines bearbeiteten Zahnrades 11 in Figur 4 sowie in der vergrößerten Darstellung der zwei bearbeiteten Zähne 14 und 15 in Figur 5 erkennbar.

Die Anspitzung von Zähnen eines Zahnrades 11 mit der in den Figuren 1 bis 3 dargestellten Vorrichtung hat den Vorteil, dass in einem einzigen Arbeitshub und mit einer einzigen Spindel 10 zwei Flächen 16, 17 von zwei Zähnen 14 und 15 gleichzeitig bearbeitet werden können.

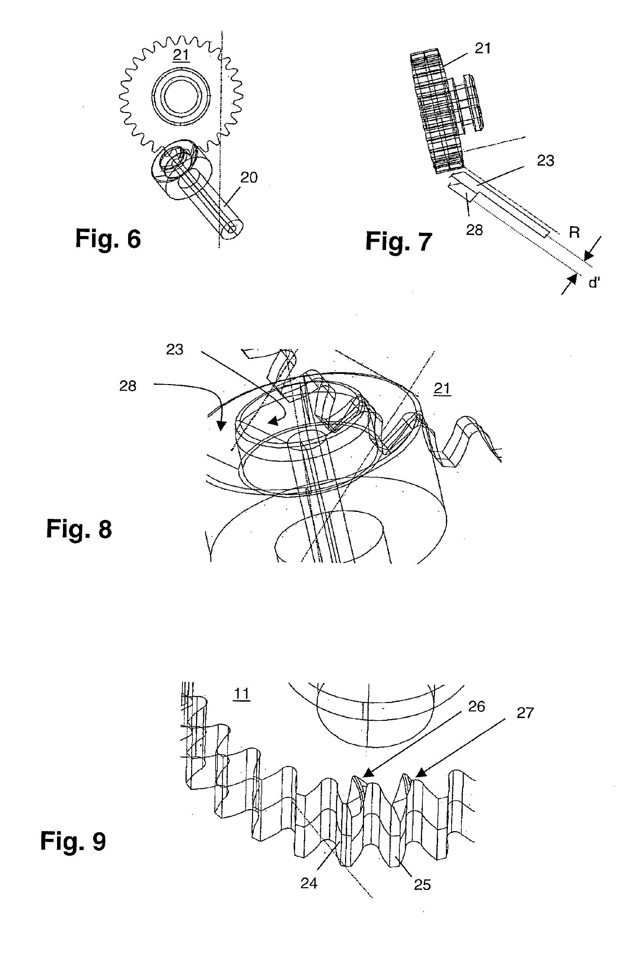

In den Figuren 6 bis 9 ist eine zweite Ausgestaltung einer Vorrichtung zum Anspitzen der Zähne eines Zahnrades 21 dargestellt. Die perspektivische Darstellung von Figur 6 zeigt, wie eine Spindel 20 zur Bearbeitung an ein Zahnrad 21 herangeführt wird.

Die Schnittansicht von Figur 7 und die vergrößerte perspektivische Darstellung des Arbeitsbereiches gemäß Figur 8 zeigen, dass die Spindel 20 an ihrem Arbeitskopf zwei Schneiden 23 und 28 trägt, die während ihrer Rotation die Mantelflächen von zwei verschieden großen Kegelstümpfen beschreiben. Die beiden Kegelstümpfe sind dabei konzentrisch zueinander angeordnet. Ihr mittlerer Abstand d' ist gerade so groß, dass sie bei entsprechender Heranführung der Spindel 20 an das Zahnrad 21 die Stirnseiten von zwei benachbarten Zähnen 24 und 25 (Fig. 9) gleichzeitig bearbeiten können. Auch bei dieser Vorrichtung wird somit der Vorteil erzielt, mit einer einzigen Spindel in einem einzigen Hub zwei Zähne gleichzeitig zu bearbeiten.

In Figur 9 sind die beiden mit einer Vorrichtung nach den Figuren 6 bis 8 erzeugten Anspitzungsflächen 26 und 27 an den benachbarten Zähnen 24 und 25 eines Zahnrades 21 erkennbar. Im Unterschied zum Arbeitsergebnis mit der ersten Vorrichtung (Figur 5) liegen bei der zweiten Vorrichtung die erzeugten Anspitzungsflächen 26 und 27 auf gleichen Seiten der Stirnflächen der Zähne 24 und 25. Das heißt, dass in Figur 9 die beiden Anspitzungen 26 und 27 beide in Blickrichtung gesehen rechts an der oberen Stirnseite der Zähne 24 und 25 ausgebildet sind.

Selbstverständlich können die in den Figuren nur für zwei Zähne dargestellten Bearbeitungsschritte sukzessive für alle Zähne eines Zahnrades wiederholt werden, so dass diese alle in gewünschter Weise angespitzt werden. Ferner können sukzessive die gegenüberliegenden Stirnseiten eines jeden Zahnes und/oder die gegenüberliegenden Seiten einer Stirnseite eines Zahnes bearbeitet werden.

## Patentansprüche

1. Vorrichtung zum Anspitzen der Stirnseiten von Zähnen eines Zahnrades, enthaltend eine Spindel mit mindestens einer Schneide, welche geneigt zur Drehachse der Spindel und auf diese zuweisend angeordnet ist,
**dadurch gekennzeichnet, dass** der Abstand der Schneide (13) von der Drehachse (R) der Spindel (10) so groß ist, dass bei Rotation der Spindel wenigstens zwei verschiedene Zähne (14, 15) des Zahnrades (11) gleichzeitig bearbeitet werden können.

2. Vorrichtung nach Anspruch 1,
**dadurch gekennzeichnet, dass** der Abstand (d) der Schneide (13) von der Drehachse (R) der Spindel (10) 20% bis 200%, vorzugsweise 80% bis 150% des Abstandes von zwei gleichzeitig zu bearbeitenden Zähnen (14, 15) des Zahnrades (11) beträgt.

3. Vorrichtung zum Anspitzen der Stirnseiten von Zähnen eines Zahnrades, enthaltend eine Spindel mit mindestens einer Schneide (23), welche geneigt zur Drehachse der Spindel und auf diese zuweisend angeordnet ist,
**dadurch gekennzeichnet, dass** die Spindel (20) eine zweite Schneide (28) enthält, welche geneigt zur Drehachse (R) der Spindel (20) und auf diese zuweisend angeordnet ist, wobei der Abstand der Schneiden (23, 28) von der Drehachse unterschiedlich und so groß ist, dass bei Rotation der Spindel gleichzeitig zwei verschiedene Zähne (24, 25) des Zahnrades (21) von jeweils einer der Schneiden (23, 28) bearbeitet werden können.

4. Vorrichtung nach Anspruch 3,
**dadurch gekennzeichnet, dass** die Differenz (d') der Abstände der Schneiden (23, 28) von der Drehachse (R) der Spindel (20) 50% bis 200% des Abstandes der Zähne (24, 25) des zu bearbeitenden Zahnrades (21) beträgt.

5. Verfahren zum Anspitzen der Stirnseiten von Zähnen (14, 15) eines Zahnrades (11), wobei eine rotierende Schneide (13) an die anzuspitzende Stirnseite eines Zahnes (14) herangeführt wird, um dort Material abzutragen,
**dadurch gekennzeichnet, dass** die Stirnseiten von zwei verschiedenen Zähnen (14, 15) gleichzeitig in den Bewegungsbereich der Schneide gebracht und dort bearbeitet werden.

6. Verfahren nach Anspruch 5,
**dadurch gekennzeichnet, dass** die jeweils nach außen gewandten Seiten (16, 17) von zwei benachbarten Zähnen (14, 15) gleichzeitig bearbeitet werden.

7. Verfahren nach Anspruch 5 oder 6,
**dadurch gekennzeichnet, dass** es mit einer Vorrichtung nach Anspruch 1 oder 2 durchgeführt wird.

8. Verfahren zum Anspitzen der Stirnseiten von Zähnen (24, 25) eines Zahnrades (21), wobei eine rotierende Schneide (23) an die anzuspitzende Stirnseite eines Zahnes (24) herangeführt wird, um dort Material abzutragen,
**dadurch gekennzeichnet, dass** gleichzeitig eine zweite rotierende Schneide (28), die mit der ersten Schneide (23) gekoppelt ist, an die Stirnseite eines zweiten Zahnes (25) herangeführt wird, um dort Material abzutragen.

9. Verfahren nach Anspruch 8,
**dadurch gekennzeichnet, dass** die zwei Schneiden (23, 28) auf einen derartigen Abstand (d') voneinander eingestellt sind, dass die in dieselbe Richtung weisenden Seiten (26, 27) von zwei Zähnen (24, 25) eines Zahnrades (21) gleichzeitig bearbeitet werden.

10. Verfahren nach Anspruch 9,
**dadurch gekennzeichnet, dass** das Zahnrad von zwei Spindeln mit jeweils zwei gekoppelten Schneiden gleichzeitig derart bearbeitet wird, **dass** die erste Spindel die in eine Richtung weisenden Seiten von zwei Zähnen bearbeitet, während die zweite Spindel gleichzeitig die in die andere Richtung weisenden Seiten von zwei anderen Zähnen bearbeitet.

11. Verfahren nach einem der Ansprüche 8 bis 10 ,
**dadurch gekennzeichnet, dass** es mit einer Vorrichtung nach Anspruch 3 oder 4 durchgeführt wird.
